# NOUVEAU FASCICULE DE BREVET EUROPEEN

(11) **EP 0 650 620 B2**
(45) Date de publication et mention de la décision concernant l'opposition: **29.08.2001**
(45) Mention de la délivrance du brevet: 29.01.1997
(21) Numéro de dépôt: 94908245.7
(22) Date de dépôt: 14.03.1994
(51) Int. Cl.: G06K 19/077

(54) **PROCEDE DE FABRICATION D'UNE CARTE COMPRENANT AU MOINS UN ELEMENT ELECTRONIQUE ET CARTE OBTENUE PAR UN TEL PROCEDE**
VERFAHREN ZUR HERSTELLUNG EINER KARTE, DIE MINDESTENS EINEN ELEKTRONISCHEN BAUSTEIN ENTHÄLT,UND NACH EINEM SOLCHEN VERFAHREN HERGESTELLTE KARTE
METHOD FOR PRODUCING A CARD WITH AT LEAST ONE ELECTRONIC COMPONENT, AND CARD THEREBY OBTAINED

(30) Priorité: 18.03.1993 CH 81993; 30.03.1993 FR 9303821
(43) Date de publication de la demande: 03.05.1995
(73) Titulaire: NagraID S.A., 2300 La Chaux-de-Fonds (CH)
(72) Inventeur: Droz, François, 2300 La Chaux-de-Fonds (CH)
(74) Mandataire: Patry, Didier Marcel Pierre
(86) Numéro de dépôt international: CH9400055
(87) Numéro de publication internationale: WO9422110

(56) Documents cités:
- EP-A- 0 326 822
- EP-A- 0 503 782
- EP-A- 0 570 784
- DE-C- 3 029 939
- FR-A- 2 601 477

## Description

La présente invention concerne une carte comprenant au moins un élément électronique, ainsi qu'un procédé de fabrication d'une telle carte.

Plus particulièrement, la présente invention concerne un procédé de fabrication d'une carte ne présentant aucun contact extérieur.

La carte selon l'invention peut par exemple être utilisée comme carte bancaire, comme carte d'accès à un espace clos, ou encore en association avec un distributeur de marchandises. Une telle carte peut aussi être utilisée comme moyen d'identification ou de contrôle.

On comprend par carte tout objet ayant une structure sensiblement plane définissant un plan général et présentant un contour quelconque dans ce plan général.

Il est connu de l'homme du métier une carte, comprenant des éléments électroniques, formée d'une coque dans laquelle sont prévus des logements, destinés à recevoir ces éléments électroniques, et d'une couche extérieure protectrice qui ferme les logements.

Il est aussi connu une carte ayant une structure symétrique et formée de deux coques sensiblement semblables, chacune de ces deux coques ayant une surface structurée servant à former des logements, destinés à recevoir des éléments électroniques, lorsque les deux coques sont assemblées.

Le procédé de fabrication de cette dernière carte est généralement le suivant :
- premièrement, chaque coque est fabriquée à l'aide d'une technique d'injection, par exemple par un moulage à chaud.
- deuxièmement, les éléments électroniques sont placés dans l'une des deux coques et l'autre coque est ensuite posée sur la première, le tout étant assemblé par une technique d'assemblage à chaud.

Le procédé de fabrication de la carte décrit ci-avant présente plusieurs inconvénients.

En particulier, après l'assemblage à chaud des deux coques, les éléments électroniques ne remplissent que partiellement les logements. Ceci a pour conséquence que la carte présente, dans les endroits où sont situés les logements, des zones fragiles, spécialement lorsque les éléments électroniques incorporés dans la carte ont des dimensions relativement grandes. C'est ainsi que lorsqu'il est prévu un bobinage d'un diamètre de l'ordre de grandeur de la carte, un tel procédé de fabrication engendre sur les faces extérieures de la carte des zones déformées (bombées ou creuses), ce qui est naturellement néfaste pour la planéité de la carte et pour des impressions pouvant être prévues sur les surfaces extérieures de cette carte.

On connaît encore du document EP-0 350 179 un procédé de fabrication d'une carte consistant à placer dans un moule deux couches extérieures et un ensemble électronique, puis à injecter un matériau de remplissage sous forme liquide dans ce moule. Une fois durci, ce matériau de remplissage forme une couche intermédiaire entre les deux couches extérieures.

Pour augmenter la rapidité de production, il est prévu deux chaînes comprenant chacune plusieurs demi-moules reliés les uns aux autres. Ces deux chaînes sont susceptibles d'avoir un mouvement vertical et de former avec deux demi-moules correspondants, appartenant respectivement aux deux chaînes, un moule présentant une ouverture au moins sur la partie supérieure du moule pour permettre son remplissage. Àu-dessus de l'endroit où les deux demi-moules correspondants sont assemblés pour former un moule est prévue une buse permettant d'injecter le matériau de remplissage sous forme liquide dans le moule nouvellement formé.

Le procédé de fabrication d'une carte décrit ci-avant est complexe. De plus, pour de grands débits de production, ce procédé de fabrication nécessite un matériel important, ce qui le rend onéreux.

On notera encore que l'apport de l'ensemble électronique et son positionnement lors de l'injection ne sont nullement décrits dans le document considéré ici et ne sont pas évidents. Il en est de même pour l'apport des couches extérieures dans les demi-moules.

La carte obtenue par le procédé de fabrication décrit ci-avant et telle que décrite dans le document EP-0 350 179 est formée essentiellement de trois couches, à savoir d'une couche intermédiaire et deux couches extérieures. A l'intérieur de la couche intermédiaire est prévu un ensemble électronique formé d'éléments électroniques, d'une bobine disposée sur un propre support et d'un support d'interconnexion, ce support d'interconnexion servant à relier électriquement et rigidement les éléments électroniques et la bobine.

Un inconvénient de cette carte provient du fait que le support d'interconnexion et le support propre à la bobine augmentent l'épaisseur de la carte. Ainsi, il est difficile d'obtenir une carte mince ayant une épaisseur de 0.76 mm prescrite par la norme ISO couramment utilisée pour les cartes bancaires.

On remarquera en outre que le procédé de fabrication proposé pour cette carte n'assure pas que le support d'interconnexion et la couche extérieure voisine soient séparés par une couche du matériau de remplissage, ce qui est néfaste pour la bonne adhérence de cette couche extérieure à la couche intermédiaire. De plus, ce procédé de fabrication ne garantit pas un bon positionnement de l'ensemble électronique au sein de la couche intermédiaire.

La présente invention a pour but de pallier les inconvénients décrits ci-avant en proposant un procédé de fabrication d'une carte peu onéreux et bien adapté à une production de cartes en grande série, ainsi qu'en proposant une carte pleine comprenant au moins un élément électronique incorporé dans cette dernière.

La présente invention concerne donc un procédé de fabrication d'une carte, comprenant un premier groupe d'étapes comportant les étapes suivantes :
B) apport, sur une surface de travail, d'au moins un élément électronique;
C) apport, sur ladite surface de travail, d'une structure de positionnement compressible de manière que ledit élément électronique et cette structure de positionnement compressible sont superposés l'un à l'autre;
D) apport, sur ladite surface de travail, d'un liant;
ce premier groupe d'étapes étant suivi par un deuxième groupe d'étapes comportant les étapes suivantes :
G) application d'une pression sur un ensemble comportant ledit élément électronique, ladite structure de positionnement compressible et ledit liant pour, d'une part, faire pénétrer ledit élément électronique au moins partiellement dans ladite structure de positionnement en comprimant cette dernière par l'intermédiaire de cet élément électroniques afin d'assurer le positionnement de ce dernier et, d'autre part, permettre un écoulement latéral dudit liant et une pénétration de ladite structure de positionnement par ce liant lorsque ce dernier est dans un état liquide visqueux pour former une masse dans laquelle est noyé ledit élément électronique et ladite structure de positionnement;
H) solidification de ladite masse de manière que cette masse relie rigidement ledit élément électronique et ladite structure de positionnement compressible et fige cette dernière dans une configuration résultant de ladite étape G.

Il résulte des caractéristiques mentionnées ci-dessus que le procédé selon l'invention est peu onéreux. En effet, ce procédé nécessite qu'un matériel relativement simple et bon marché. Ensuite, le procédé selon l'invention permet facilement de fabriquer plusieurs cartes simultanément. Il est donc bien adapté à la production de cartes en grand série.

Ensuite, le procédé de fabrication d'une carte selon l'invention décrit ci-dessus assure le positionnement de l'élément électronique au sein de la carte. Ce positionnement de l'élément électronique obtenu par la pénétration de celui-ci dans la structure de positionnement compressible rend le procédé selon l'invention particulièrement fiable. De plus, ceci peut être avantageux pour plusieurs applications possibles de la carte obtenue par ce procédé de fabrication.

Selon diverses variantes nullement limitatives du procédé selon l'invention, la structure de positionnement compressible est formé par une structure alvéolée, une structure constituée de fils tissés ou enchevêtrés, une feuille ondulée perméable au liant ou encore un papier gaufré également perméable au liant.

Dans un premier cas, la structure de positionnement compressible est formé par une seule et même pièce alors que dans un autre cas, cette structure de positionnement compressible est formée en deux parties. Dans ce dernier cas, l'élément électronique est placé entre ces deux parties.

Selon un premier mode de mise en oeuvre du procédé selon l'invention, le liant apporté lors de l'étape D est formé par un liquide. A titre d'exemple, le liant est formé par une résine apportée sous forme de liquide visqueux à température ambiante, cette résine ayant la propriété de durcir au contact de l'air.

Selon un deuxième mode de mise en oeuvre du procédé selon l'invention décrit ci-avant, le liant apporté dans l'étape D est formé par un matériau fusible solide. Dans ce deuxième mode de mise en oeuvre, le procédé selon l'invention comporte dans le deuxième groupe d'étapes également l'étape suivante :

F) apport d'énergie servant à fondre au moins partiellement le liant.

Dans une variante préférée du deuxième mode de mise en oeuvre du procédé selon l'invention, l'étape G comporte une première phase, précédant l'étape F, dans laquelle la pression appliquée sur l'ensemble sert à faire pénétrer l'élément électronique dans la structure de positionnement compressible et une seconde phase, simultanée ou ultérieure à l'étape F, dans laquelle la pression appliquée sur l'ensemble permet au liant de former une masse dans laquelle est noyé l'élément électronique.

Selon une caractéristique particulière du procédé de fabrication d'une carte selon l'invention, il est prévu d'apporter au moins une couche extérieure sur la surface de travail. Cette couche extérieure est placée de manière que ledit ensemble, comportant l'élément électronique, la structure de positionnement compressible et le liant, est situé soit sur cette couche extérieure, soit sous cette couche extérieure et que l'élément électronique est situé entre cette couche extérieure et la structure de positionnement compressible. Dans le cas où deux couches extérieures sont prévues, celles-ci sont placées de part et d'autre dudit ensemble.

On notera que lorsqu'aucune couche extérieure n'est prévue, la surface de travail est non-adhérente au liant.

La structure de positionnement compressible est choisie de telle manière qu'elle permet un écoulement latéral du liant apporté tout au long du procédé de fabrication d'une carte selon l'invention. De ce fait, le liant peut s'étendre de mànière homogène dans un plan sensiblement parallèle au plan de la surface de travail, ce qui empêche la formation de régions de surpression lors de l'étape d'application d'une pression et permet au liant d'enrober correctement l'élément électronique et, le cas échéant, une bobine. De plus, un surplus de liant peut aisément être évacué latéralement lors de l'étape G.

Dans le cas du deuxième mode de mise en oeuvre et lorsque des couches extérieures sont prévues, la structure de positionnement assure le maintien de ces couches extérieures lors de l'apport d'énergie servant à fondre au moins partiellement le liant De ce fait, la structure de positionnement compressible empêche que ces couches extérieures se rétractent ou ondulent sous l'effet de l'apport d'énergie.

Ainsi, la structure de positionnement assure en premier lieu le positionnement de l'élément électronique et des divers autres éléments prévus dans la carte tout au long du procédé selon l'invention. Ensuite, elle assure un écoulement latérale du liant lorsque celui-ci est dans sa phase liquide et en particulier lorsqu'une pression est appliquée sur ce dernier. De plus, cette structure de positionnement compressible assure en particulier que la couche extérieure supérieure, lorsque cette dernière est prévue, reste sensiblement plane tout au long du procédé.

Lorsqu'une étape d'apport d'énergie est prévue, on notera que le liant présente avantageusement une température de fusion inférieure à la température de fusion du matériau constituant, le cas échéant, la couche extérieure supérieure et/ou la couche extérieure inférieure.

Dans un troisième mode de mise en oeuvre, le matériau choisi pour le liant, la quantité d'énergie apportée et la pression exercée sur ce liant sont choisies de manière que le liant comprime et pénètre entièrement la structure de positionnement compressible de telle manière que la structure de positionnement compressible est entièrement englobée dans une masse formée par le liant, cette masse présentant alors une région superficielle supérieure et une région superficielle inférieure définissant respectivement des première et deuxième couches extérieures.

La présente invention a également pour objet une carte comprenant au moins un élément électronique et une couche formée par un liant dans lequel est noyé ledit élément électronique, cette carte étant caractérisée en ce qu'elle comprend une structure de positionnement pour ledit élément électronique située à l'intérieur de ladite couche formée par ledit liant, cette structure de positionnement étant comprimée pour l'intermédiaire de cet élément électronique dans une zone interne à l'intérieur de laquelle est logé partiellement ledit élément électronique, ledit liant ayant pénétré ladite structure de positionnement et formant une masse compacte dans laquelle sont noyés ledit élément électronique et ladite structure de positionnement.

Selon un mode de réalisation particulier, la carte comprend en outre une bobine ayant deux extrémités de contact électrique directement reliées à l'élément électronique prévu.

Finalement, selon un autre mode de réalisation particulier de la carte selon l'invention, cette dernière comprend une première couche extérieure et une deuxième couche extérieure, la couche formée par le liant constituant une couche intermédiaire entre ces première et deuxième couches extérieures, au moins la majeure partie de la surface interne de chacune de ces première et deuxième couches extérieures étant recouverte par le liant, ce dernier assurant la cohésion de ces première et deuxième couches extérieures avec la couche intermédiaire.

D'autres caractéristiques et avantages de la présente invention seront également exposés à l'aide de la description suivante faite en référence aux dessins annexés, lesquels sont donnés à titre nullement limitatif et dans lesquels :
La figure 1 représente schématiquement un premier mode de mise en oeuvre du procédé de fabrication d'une carte selon l'invention;
La figure 2 représente schématiquement une variante du premier mode de mise en oeuvre de la figure 1;
La figure 3 représente schématiquement un deuxième mode de mise en oeuvre du procédé de fabrication d'une carte selon l'invention;
Les figures 4 et 5 représentent schématiquement et en coupe des premier et deuxième modes de réalisation d'une carte selon l'invention;
La figure 6 représente schématiquement un troisième mode de mise en oeuvre du procédé selon l'invention;
La figure 7 représente schématiquement et en coupe un troisième mode de réalisation d'une carte selon l'invention résultant du troisième mode de mise en oeuvre;
La figure 8 représente schématiquement et en coupe une variante du deuxième mode de réalisation d'une carte selon l'invention;

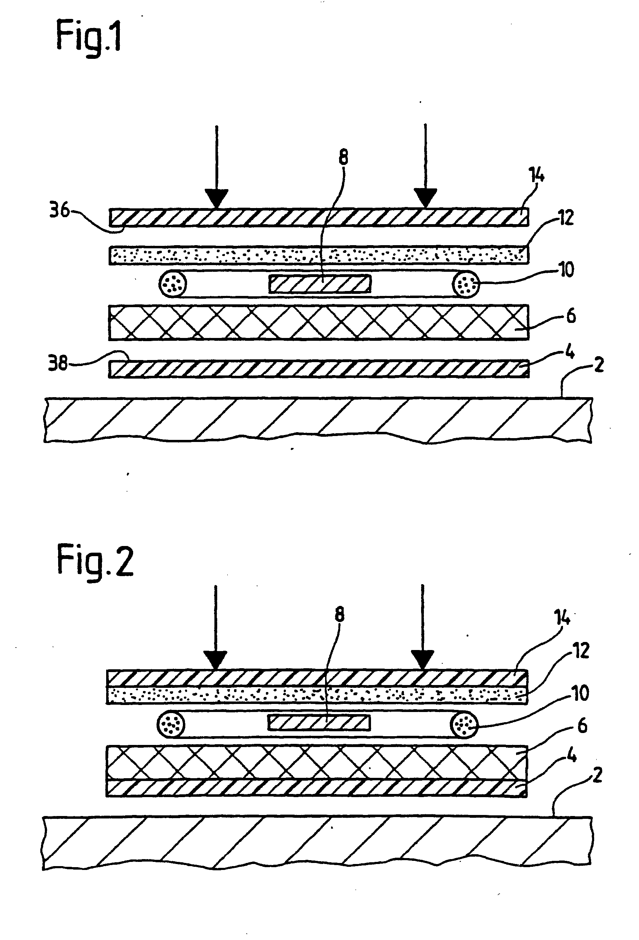

On notera que, dans les divers modes de mise en oeuvre du procédé de fabrication d'une carte selon l'invention représentés aux figures 1, 2, 3 et 6, les divers éléments intervenant sont représentés schématiquement en coupe. Dans chacune de ces figures, le plan de coupe choisi correspond à un plan perpendiculaire au plan général de la carte obtenue par le procédé selon l'invention.

En se référant aux figures 1, 2, 4, 5 et 8, on décrira ci-après un premier mode de mise en oeuvre du procédé selon l'invention, ainsi que des premier et deuxième modes de réalisation d'une carte selon l'invention obtenue par ce premier mode de mise en oeuvre du procédé selon l'invention.

Selon ce premier mode de mise en oeuvre, il est prévu d'apporter, sur une surface de travail 2, une première couche extérieure 4. Sur cette couche extérieure 4 est apportée une structure de positionnement compressible 6. Ensuite, un élément électronique B et une bobine 10 sont apportés et placés sur la structure de positionnement compressible 6. Un liant 12 sous forme de feuille solide est également apporté sur la surface de travail 2 et placé sur l'élément électronique 8 et la bobine 10. Sur cette feuille de liant 12 est encore apportée une deuxième couche extérieure 14.

On notera que, sur la figure 1, la structure de positionnement compressible 6 et la feuille de liant 12 sont apportées sur la surface de travail 2 de manière indépendante des couches extérieures 4 et 14.

Par contre, dans une variante du premier mode de mise en oeuvre représentée à la figure 2, la structure de positionnement compressible 6 et la feuille de liant 12 sont respectivement assemblées préalablement avec les deux couches extérieures 4 et 14 avant d'être apportées sur la surface de travail 2. Ceci peut être avantageux pour faciliter l'apport des différents éléments prévus pour la fabrication de la carte selon l'invention.

Une fois les divers éléments susmentionnés apportés, il est prévu d'appliquer une pression à l'aide d'une presse (schématisée par deux flèches) sur l'ensemble des éléments apportés, en particulier sur l'élément électronique 8 et la bobine 10. Ceci a pour effet de permettre à cet élément électronique 8 et cette bobine 10 de pénétrer au moins partiellement dans la structure de positionnement compressible 6. Cette pénétration est effectuée soit par écrasement, soit par compression de la structure de positionnement compressible 6. De ce fait, l'élément électronique 8 et la bobine 10 sont immédiatement positionnés relativement à la structure de positionnement compressible 6, cet élément électronique 8 et cette bobine 10 formant sous l'effet de la pression appliquée une zone interne dans laquelle ils sont maintenus. Ainsi, le positionnement de l'élément électronique 8 et de la bobine 10 est assuré.

Dans le cas de ce premier mode de mise en oeuvre, il est prévu un apport d'énergie servant à fondre au moins partiellement la feuille de liant 12. On notera ici que le liant 12 est constitué par un matériau fusible. De manière préférée, la température de fusion de ce matériau fusible est inférieure à la température de fusion du matériau constituant les couches extérieures 4 et 14.

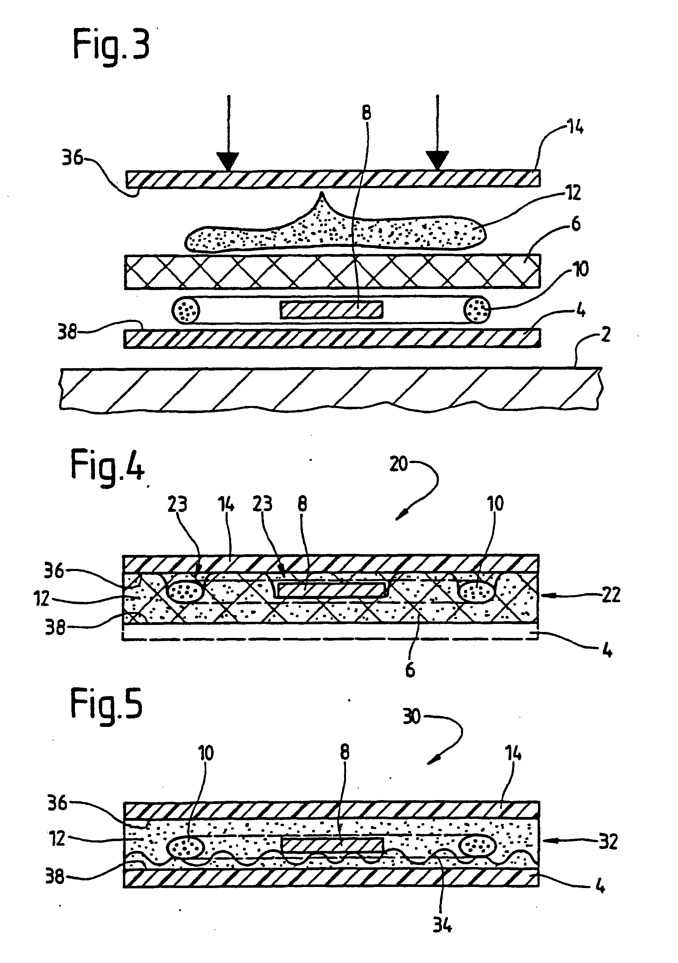

Parallèlement à l'apport de chaleur, l'application d'une pression est maintenue de manière à permettre au liant 12 de former une masse dans laquelle est noyée l'élément électronique 8 et la bobine 10. Dans le cas de la variante de la figure 1, la structure de positionnement compressible 6 est perméable au liant 12 lorsque celui-ci est fondu. De ce fait, le liant 12 peut pénétrer la structure de positionnement compressible 6 et la traverser de manière à ce que cette structure de positionnement compressible 6 soit entièrement noyée dans le liant 12, lequel forme alors une couche intermédiaire entre les couches extérieures 4 et 14 comme cela est représenté sur la figure 4.

Sur cette figure 4, la carte 20 comprend dans une première variante une première couche extérieure 4, alors que dans une deuxième variante cette couche extérieure 4 est omise. La carte 20 comprend également une couche intermédiaire 22 formée par le liant 12 dans lequel sont noyés l'élément électronique 8, la bobine 10 et la structure de positionnement comprimée 6. La carte 20 comprend encore une couche extérieure 14 recouvrant l'élément électronique 8, la bobine 10 et la structure de positionnement 6. L'élément électronique 8 et la bobine 10 sont situés dans une zone interne 23 de la structure de positionnement compressible 6, cette dernière étant dans une configuration comprimée.

Le liant 12 et le matériau formant la couche extérieure 14 et, le cas échéant, la couche extérieure 4 sont choisis de telle manière que la couche intermédiaire 22 adhère solidement aux couches extérieures 4 et 14 après solidification du liant. A titre d'exemple nullement limitatif, le liant est constitué soit par une résine, soit par un matériau plastique. La résine peut être notamment une colle à deux composants durcissant au contact de l'air et le matériau plastique un chlorure de polyvinyle. Les couches extérieures 4 et 14 sont constituées par exemple par un matériau plastique, notamment un chlorure de polyvinyle ou du polyuréthane.

On remarquera que la température de fusion de la structure de positionnement compressible 6 est supérieure à la température de fusion du liant 12.

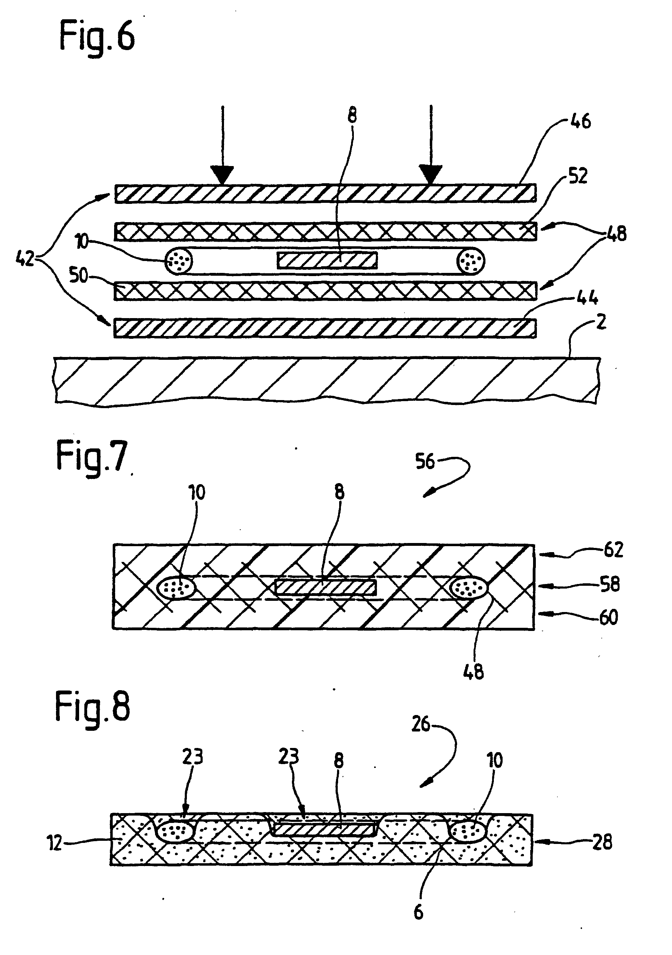

On notera encore que l'ordre dans lequel la structure de positionnement compressible, l'élément électronique 6, la bobine 10 et la feuille de liant solide 12 sont apportés peut être quelconque. Ensuite, la structure de positionnement compressible 6 peut être formée d'une seule pièce ou de deux parties. De même, le liant apporté peut être formé par une seule feuille de liant ou par deux feuilles de liant disposées de part et d'autre de la structure de positionnement compressible 6. De plus, il est possible de ne pas prévoir les couches extérieures 4 et 14. Dans ce cas, il résulte du procédé de fabrication selon l'invention une carte telle que représentée à la figure 8.

Sur cette figure 8, la carte 26 comprend une seule couche 28 formée par le liant 12 dans lequel sont noyés l'élément électronique 8, la bobine 10 et la structure de positionnement comprimée 6. Cette dernière présente à nouveau une zone interne 23 dans laquelle sont situés l'élément électronique 8 et la bobine 10.

Selon diverses variantes de ce premier mode de mise en oeuvre du procédé selon l'invention, la structure de positionnement compressible 6 est formée soit par un matériau expansé comme une mousse, soit par une structure alvéolée, soit encore par un ensemble de fils tissés ou enchevêtrés.

Selon deux autres variantes, la structure de positionnement compressible 6 est formée soit par un papier gaufré perméable au liant 12 ou présentant des perforations, soit par une feuille ondulée également perméable au liant 12 ou présentant des perforations.

La carte obtenue par cette dernière variante du premier mode de mise en oeuvre du procédé selon l'invention est représentée schématiquement à la figure 5.

Sur cette figure 5, la carte 30 comprend une première couche extérieure 4 et une deuxième couche extérieure 14. La carte 30 comprend également une couche intermédiaire 32 formée par le liant 12 et dans laquelle sont noyés l'élément électronique 8, la bobine 10 et la structure de positionnement formée par une feuille ondulée comprimée 34.

Toutes les structures de positionnement compressibles mentionnées ci-avant présentent la caractéristique de permettre un écoulement latéral du liant 12. De même, chacune de ces structures de positionnement compressible peut être pénétrée par le liant 12 lorsque ce dernier est sous forme de liquide visqueux et qu'une pression est appliquée sur ce dernier. Chacune des structures de positionnement compressibles mentionnée ci-dessus permet donc au liant 12 de former une masse compacte dans laquelle sont noyés l'élément électronique 8, la bobine 10 et la structure de positionnement compressible. Ainsi, les surfaces internes respectives 36 et 38 des couches extérieures 4 et 14 sont quasi entièrement recouvertes par le liant 12. De ce fait, il est possible d'assurer une très bonne cohésion entre la couche intermédiaire 22 ou 32 et les couches extérieures 4 et 14 disposées de part et d'autre de cette couche intermédiaire 22 ou 32.

On notera encore que la structure de positionnement compressible 6 permet non seulement l'écoulement latéral du liant 12 fondu, mais également l'écoulement latéral de l'air se trouvant dans la région intermédiaire entre la couche extérieure 4 et la couche extérieure 14. De ce fait, si la feuille de liant 12 est fondue de manière à ce que le liant ait la consistance d'un liquide visqueux, ce liant 12, sous l'effet de la pression appliquée sur la couche extérieure 14, remplit progressivement cette région intermédiaire de telle manière que la carte résultante comporte un air résiduel très faible.

En se référant ci-après à la figure 3 et aux figures 4, 5 et 8 déjà décrites, on décrira ci-après un deuxième mode de mise en oeuvre du procédé de fabrication d'une carte selon l'invention.

Ce deuxième mode de mise en oeuvre diffère essentiellement du premier mode de mise en oeuvre en ce que le liant est apporté sous forme liquide, notamment sous forme de liquide présentant une viscosité élevée, et en ce que l'apport d'énergie servant à fondre la feuille de liant dans le premier mode de mise en oeuvre n'est plus nécessaire.

Ce deuxième mode de mise en oeuvre présente donc l'avantage essentiel de ne nécessiter aucun apport d'énergie, ni de moyens servant à cet apport d'énergie.

Pour ce qui concerne les autres étapes du procédé et les diverses caractéristiques des éléments constitutifs de la carte fabriquée, ils sont semblables à ceux du premier mode de mise en oeuvre décrit ci-avant. De ce fait, ces diverses étapes et caractéristiques des matériaux constitutifs ne seront pas décrits à nouveau ici.

On mentionnera seulement que l'apport du liant peut être effectué en deux phases, la première phase consistant en une application d'une première partie du liant 12 directement sur la couche extérieure 4, la seconde partie du liant étant apportée sur la structure de positionnement compressible 6. De ce fait, il est possible d'assurer encore mieux que l'élément électronique 8 et la structure de positionnement compressible soient correctement enrobés par le liant 12, de telle manière que les surfaces internes respectives 36 et 38 des couches extérieures 4 et 14 sont quasi entièrement recouvertes par le liant 12. La carte obtenue présente ainsi dans son ensemble une très bonne cohésion.

En se référant aux figures 6 et 7, on décrira ci-après un troisième mode de mise en oeuvre du procédé selon l'invention, ainsi qu'une carte selon l'invention obtenue par ce troisième mode de mise en oeuvre.

Selon ce troisième mode de mise en oeuvre, il est prévu d'apporter sur une surface de travail 2 un liant 42 formé par une première couche solide 44 et une seconde couche solide 46. Il est également prévu d'apporter une structure de positionnement compressible 48 formée par une première partie 50 et une seconde partie 52. Un élément électronique 8 et une bobine 10 sont également apportés. On notera ici, comme dans les autres modes de mise en oeuvre décrits ci-avant, que la bobine 10 a deux extrémités de contact électrique qui sont, de préférence, directement reliées à l'élément électronique 8. De ce fait, l'élément électronique 8 et la bobine 10 forment un ensemble sans support rigide assurant une liaison mécanique rigide entre cet élément électronique 8 et cette bobine 10. Ainsi, il est possible d'obtenir des cartes minces.

La structure de positionnement 48, l'élément électronique 8 et la bobine 10 sont apportés de telle manière que l'élément électronique 8 et la bobine 10 sont situés entre la première partie 50 et la seconde partie 52 de la structure de positionnement compressible 48. Les deux parties 44 et 46 du liant 42 sont placées de part et d'autre de la structure de positionnement compressible 48.

A l'aide d'une presse (schématisée par deux flèches), une pression est appliquée sur l'ensemble des éléments apportés et un apport d'énergie servant à fondre au moins partiellement le liant 42 est prévu. Sous l'effet de la pression appliquée, l'élément électronique 8 et la bobine 10 pénètre dans la structure de positionnement compressible 48 dont les deux parties 50 et 52 se rejoignent en fermant ainsi à l'intérieur de cette structure 48 l'élément électronique 8 et la bobine 10.

Le matériau pour le liant 42, notamment un matériau plastique comme du chlorure de polyvinyle, l'épaisseur de chacune des deux parties 50 et 52 de la structure de positionnement compressible 48 et la quantité d'énergie apportée sont choisis pour que le liant 42 en fusion pénètre la structure de positionnement compressible 48 de manière à noyer cette structure de positionnement 48 avec l'élément électronique 8 et la bobine 10 tout en laissant une couche de liant de part et d'autre de la structure de positionnement 48.

De ce fait, ce troisième mode de mise en oeuvre du procédé selon l'invention permet d'obtenir une carte formée d'un seul et même matériau, comme cela est représenté sur la figure 7.

Sur cette figure 7, la carte 56 est formée en un seul bloc à l'intérieur duquel est compris l'élément électronique 8, la bobine 10 et la structure de positionnement 48 comprimée. On distingue ainsi dans cette carte 56 une région intermédiaire 58 dans laquelle sont situées la structure de positionnement 48 comprimée, l'élément électronique 8 et la bobine 10 et des première et deuxième régions superficielles 60 et 62 définissant chacune une couche extérieure présentant une surface plane et lisse.

Ce troisième mode de mise en oeuvre du procédé selon l'invention se distingue donc essentiellement des deux autres modes de mise en oeuvre par le fait que le matériau formant le liant des divers éléments apportés sert conjointement à la formation de deux régions superficielles 60 et 62 définissant chacune une couche extérieure.

On remarquera que le procédé de fabrication selon l'invention permet, dans chacun des modes de mise en oeuvre décrit ci-avant, de fabriquer plusieurs cartes simultanément sur la même surface de travail. Pour ce faire, on fabrique selon le procédé de l'invention une plaque dont les dimensions en projection sur la surface de travail correspondent à celles de plusieurs cartes. Ceci ne présente aucune difficulté de mise en oeuvre supplémentaire relativement à la fabrication d'une seule carte.

A l'aide du premier mode de mise en oeuvre du procédé selon l'invention représenté à la figure 1, on décrira brièvement le procédé de fabrication de plusieurs cartes simultanément selon ce premier mode de mise en oeuvre.

De manière similaire au premier mode de mise en oeuvre, il est prévu d'apporter sur une surface de travail une première couche extérieure dont les dimensions en projection sur cette surface de travail correspondent au moins à celles des plusieurs cartes fabriquées. Ensuite, une structure de positionnement compressible de mêmes dimensions est apportée et placée sur la première couche extérieure.

Dans le cas où il s'agit de la fabrication de plusieurs cartes identiques, il est prévu d'apporter sur la structure de positionnement compressible plusieurs ensembles électroniques comportant par exemple chacun un élément électronique 8 et une bobine 10. Chacun de ces ensembles électronique est placé sur la structure de positionnement compressible à un endroit défini. En particulier, ces divers ensembles sont placés de manière à présenter une certaine régularité spatiale de positionnement sur la structure de positionnement compressible.

Ensuite, une feuille de liant ayant les dimensions de la première couche extérieure et de la structure de positionnement compressible est apportée en regard de ces deux dernières. Une deuxième couche extérieure est encore apportée sur la feuille de liant et une pression est exercée sur cette dernière de manière à faire pénétrer au moins partiellement les ensembles électroniques dans la structure de positionnement compressible.

De ce fait, chaque ensemble électronique est maintenu par la structure de positionnement compressible à l'endroit où il a été initialement placé relativement à une projection sur la surface de travail.

Tout comme dans le premier mode de mise en oeuvre, un apport d'énergie est prévu pour fondre au moins partiellement la feuille de liant et une pression est exercée sur ce liant de telle manière qu'il pénètre la structure de positionnement en enrobant les divers ensembles électroniques pourformer finalement une masse définissant une couche intermédiaire entre les première et deuxième couches extérieures, les ensembles électroniques et la structure de positionnement comprimée étant noyés dans cette masse.

On notera ici que l'étape d'apport d'énergie et l'étape d'application d'une pression sur les divers éléments apportés peuvent être simultanés. L'homme du métier peut facilement déterminer les paramètres temporelles avantageux pour ces deux étapes.

Après une étape de solidification, il est prévu une étape finale de découpe de chaque carte. Cette étape de découpe est effectuée de telle manière que le contour prévu pour chacune des cartes fabriquées n'intercepte aucune des zones internes dans lesquelles les ensembles électroniques sont positionnés.

Etant donné que la structure de positionnement garantit le positionnement des divers ensembles électroniques tout au long du procédé de fabrication selon l'invention, cette étape de découpe ne risque pas d'endommager les ensembles électroniques.

On remarquera donc qùe le procédé de fabrication selon l'invention est particulièrement bien adapté à la fabrication de plusieurs cartes simultanément sur la même surface de travail. Tous les éléments apportés sont simples et ne présentent aucune difficulté de fabrication. De plus, le procédé est fiable et assure une bonne qualité des cartes fabriquées.

En particulier, la structure de positionnement compressible permet qu'un surplus de liant puisse être évacué latéralement et empêche donc la formation de régions présentant une surpression, ce qui serait néfaste pour les ensembles électroniques et pour la planéité de la carte obtenue.

## Revendications

1. Procédé de fabrication d'une carte, comprenant un premier groupe d'étapes comportant les étapes suivantes :
B) apport, sur une surface de travail (2), d'au moins un élément électronique (8);
C) apport, sur ladite surface de travail, d'une structure de positionnement compressible (6; 34;48) de manière que ledit élément électronique et cette structure de positionnement compressible sont superposés l'un à l'autre;
D) apport, sur ladite surface de travail, d'un liant (12;42);
ce premier groupe d'étapes étant suivi par un deuxième groupe d'étapes comportant les étapes suivantes :
G) application d'une pression sur un ensemble comportant ledit élément électronique (8), ladite structure de positionnement compressible (6;34;48) et ledit liant (12;42) pour, d'une part, faire pénétrer ledit élément électronique au moins partiellement dans ladite structure de positionnement en comprimant cette dernière par l'intermédiaire de cet élément électroniques afin d'assurer le positionnement de ce dernier et, d'autre part, permettre un écoulement latéral dudit liant et une pénétration de ladite structure de positionnement par ce liant lorsque ce dernier est dans un état liquide visqueux pour former une masse dans laquelle est noyé ledit élément électronique et ladite structure de positionnement;
H) solidification de ladite masse de manière que cette masse relie rigidement ledit élément électronique (8) et ladite structure de positionnement compressible (6;34;48) et fige cette dernière dans une configuration résultant de ladite étape G.

2. Procédé selon la revendication 1, dans lequel ledit liant (12;42) apporté lors de ladite étape D est formé par un liquide visqueux.

3. Procédé selon la revendication 1, dans lequel ledit liant (12;42) apporté dans ladite étape D est formé par un matériau fusible solide et le deuxième groupe d'étapes comporte également l'étape suivante :
F) apport d'énergie servant à fondre au moins partiellement ledit liant;
ladite étape H étant ultérieure à cette étape F.

4. Procédé selon la revendication 3, dans lequel ladite étape G comporte une première phase, précédent ladite étape F, dans laquelle ladite pression appliquée sur ledit ensemble sert à faire pénétrer ledit élément électronique (8) au moins partiellement dans ladite structure de positionnement compressible (6;34;48) et une seconde phase, simultanée ou ultérieure à ladite étape F, dans laquelle ladite pression appliquée sur ledit ensemble permet audit liant de former une masse dans laquelle est noyé ledit élément électronique.

5. Procédé selon l'une quelconque des revendications 1 à 4, dans lequel ladite structure de positionnement compressible (6;34;48) est entièrement noyée dans ledit liant (12;42) après ladite étape G.

6. Procédé selon l'une quelconque des revendications 1 à 5, dans lequel ledit premier groupe d'étapes comporte en outre l'étape suivante :
A) apport, sur ladite surface de travail (2), d'une couche extérieure (4) et placement de cette couche extérieure de manière que ledit ensemble est situé sur cette couche extérieure.

7. Procédé selon l'une quelconque des revendications 1 à 5, dans lequel ledit premier groupe d'étapes comporte en outre l'étape suivante :
E) apport, sur ledit ensemble, d'une couche extérieure (14).

8. Procédé selon la revendication 6 ou 7, dans lequel lesdites étapes G et H servent également à lier solidement ladite couche extérieure (4;14) à ladite masse formée par ledit liant (12).

9. Procédé selon l'une quelconque des revendications précédentes, dans lequel ladite structure de positionnement compressible (6;48) est formée par un matériau expansé.

10. Procédé selon la revendication 9, dans lequel ladite structure de positionnement compressible (6;48) est formée par une mousse.

11. Procédé selon l'une quelconque des revendications 1 à 8, dans lequel ladite structure de positionnement compressible (6;48) est formée par une structure alvéolée.

12. Procédé selon l'une quelconque des revendications 1 à 8, dans lequel ladite structure de positionnement compressible (6;48) est formée par un ensemble de fils tissés ou enchevêtrés.

13. Procédé selon l'une quelconque des revendications 1 à 8, dans lequel ladite structure de positionnement (34) est formée par une feuille ondulée perméable audit liant ou présentant des perforations.

14. Procédé selon l'une quelconque des revendications 1 à 8, dans lequel ladite structure de positionnement compressible (6;48) est formée par un papier gaufré perméable audit liant ou présentant des perforations.

15. Procédé selon l'une quelconque des revendications précédentes, dans lequel ladite structure de positionnement compressible (48) comprend une première partie (50) et une seconde partie (52), ces premières et secondes parties étant disposées respectivement de part et d'autre dudit élément électronique (8).

16. Procédé selon la revendication 1, dans lequel ledit liant (12;42) apporté est formé par une résine, cette résine durcissant lors de ladite étape H à température ambiante.

17. Procédé selon la revendication 1, dans lequel ledit liant (12;42) est constitué par un matériau plastique.

18. Procédé selon la revendication 2, dans lequel ledit liant (12) est apporté en deux phases, la première phase consistant en une application d'une première partie dudit liant avant lesdites étapes B et C, la seconde phase consistant en un apport d'une seconde partie dudit liant après ces étapes B et C.

19. Procédé selon la revendication 3, dans lequel ledit liant (42) apporté est formé par deux feuilles (44,46) disposées de part et d'autre de ladite structure de positionnement compressible (48) et de l'élément électronique (8).

20. Procédé selon la revendication 6 ou 7, dans lequel au moins une partie dudit liant (12) est préalablement assemblée avec ladite couche extérieure (14) avant d'être apportée.

21. Procédé selon la revendication 6 ou 7, dans lequel ladite structure de positionnement compressible (6) est préalablement assemblée avec ladite couche extérieure (4) avant d'être apportée.

22. Procédé selon l'une quelconque des revendications précédentes, dans lequel il est prévu d'apporter lors de ladite étape B une bobine (10) ayant deux extrémités de liaison électrique reliées directement audit élément électronique (8).

23. Procédé selon l'une quelconque des revendications précédentes, dans lequel plusieurs cartes sont fabriquées simultanément sur ladite surface de travail (2), une étape finale de découpe de chacune des plusieurs cartes fabriquées étant prévue.

24. Carte (20;26;30;56) comprenant au moins un élément électronique (8) et une couche (22;28;32;58) formée par un liant (12;42) dans lequel est noyé ledit élément électronique, cette carte étant **caractérisée en ce qu**'elle comprend une structure de positionnement (6;34;48) pour ledit élément électronique située à l'intérieur de ladite couche formée par ledit liant, cette structure de positionnement étant comprimée par l'intermédiaire de cet élément électronique dans une zone interne (23) à l'intérieur de laquelle est logé partiellement ledit élément électronique, ledit liant ayant pénétré ladite structure de positionnement et formant une masse compacte dans laquelle sont noyés ledit élément électronique et ladite structure de positionnement.

25. Carte (20;26;30;56) selon la revendication 24, **caractérisée en ce qu**'elle comprend une bobine (10) ayant deux extrémités de contact électrique directement reliés audit élément électronique (8), ce dernier formant avec ladite bobine un ensemble enrobé par ledit liant (12;42).

26. Carte (20;30) selon la revendication 24 ou 25, **caractérisée en ce qu**'elle comprend une première couche extérieure (4) et une deuxième couche extérieure (14), ladite couche (22;32) formée par ledit liant (12) constituant une couche intermédiaire entre lesdites première et deuxième couches extérieures, au moins la majeure partie de la surface interne (36;38) de chacune de ces première et deuxième couches extérieures étant recouvertes par ledit liant, ce dernier assurant la cohésion de ces première et deuxième couches extérieures avec ladite couche intermédiaire.

## Patentansprüche

1. Verfahren zum Herstellen einer Karte, umfassend eine erste Gruppe von Schritten mit den folgenden Schritten:
B) Aufbringen mindestens eines elektronischen Elements (8) auf eine Arbeitsoberfläche (2);
C) Aufbringen einer kompressiblen Positionierstruktur (6;34;48) auf die Arbeitsoberfläche derart, daß das elektronische Element und die kompressible Positionierstruktur zueinander überlagert sind;
D) Aufbringen eines Bindemittels (12;42) auf die Arbeitsoberfläche, welcher ersten Gruppe von Schritten eine zweite Gruppe von Schritten folgt, umfassend die nachstehenden Schritte:
G) Einwirkenlassen eines Druckes auf eine Baugruppe, umfassend das elektronische Element (8), die kompressible Positionierstruktur (6;34;48) und das Bindemittel (12;42), um einerseits das elektronische Element mindestens teilweise in die Positionierstruktur eindringen zu lassen, indem man diese Positionierstruktur durch dieses elektronische Element komprimiert um-die Positionierung dieses letzteren zu sichern, und anderseits ein seitliches Fliessen des Bindemittels und eine Penetration der Positionierstruktur durch das Bindenmittel zu ermöglichen, wenn dieses letztere in einem flüssig viskosen Zustand ist, um eine Masse zu bilden, in der das elektronische Element und die Positionierstruktur eingebettet sind;
H) Verfestigung der Masse derart, daß diese Masse starr das elektronische Element (8) und die kompressible Positionierstruktur (6;34;48) verbindet und diese letztere in einer Konfiguration erstarren läßt, wie sie aus dem Schritt G herrührt.

2. Verfahren nach Anspruch 1, bei dem das Bindemittel (12;42), das in dem Schritt D) aufgebracht wird, von einer viskosen Flüssigkeit gebildet ist.

3. Verfahren nach Anspruch 1, bei dem das Bindemittel (12;42), das in dem Schritt D aufgebracht wird, von einem festen aufschmelzbaren Material gebildet ist und die zweite Gruppe von Schritten gleichermaßen den folgenden Schritt umfaßt:
F) Zufuhr von Energie, die dem mindestens teilweisen Aufschmelzen des Bindemittels dient, wobei der Schritt H dem Schritt F folgt.

4. Verfahren nach Anspruch 3, bei dem der Schritt G eine erste Phase umfaßt, die dem Schritt F vorangeht, in der der auf die Baugruppe ausgeübte Druck dazu dient, das elektronische Element (8) mindestens teilweise in die kompressible Positionierstruktur (6;34;48) eindringen zu lassen, und eine zweite Phase, die gleichzeitig oder nach dem Schritt F erfolgt, in der der auf die Baugruppe ausgeübte Druck dem Bindemittel ermöglicht, eine Masse zu bilden, in der das elektronische Element eingebettet ist.

5. Verfahren nach einem der Ansprüche 1 bis 4, bei dem die kompressible Positionierstruktur (6;34;48) vollständig in dem Bindemittel (12;42) nach dem Schritt G eingebettet ist.

6. Verfahren nach einem der Ansprüche 1 bis 5, bei dem die erste Gruppe von Schritten ferner den folgenden Schritt umfaßt:
A) Aufbringen einer Außenschicht (4) auf die Arbeitsoberfläche (2) und Plazieren dieser Außenschicht derart, daß die Baugruppe sich auf dieser Außenschicht befindet.

7. Verfahren nach einem der Ansprüche 1 bis 5, bei dem die erste Gruppe von Schritten ferner den folgenden Schritt umfaßt:
E) Aufbringen auf die Baugruppe einer Außenschicht (14).

8. Verfahren nach Anspruch 6 oder 7, bei dem die Schritte G und H gleichermaßen dazu dienen, die Außenschicht (4;14) fest mit der von dem Bindemittel (12) gebildeten Masse zu verbinden.

9. Verfahren nach einem der vorangehenden Ansprüche, bei dem die kompressible Positionierstruktur (6;48) von einem aufgeblähten Material gebildet ist.

10. Verfahren nach Anspruch 9, bei dem die kompressible Positionierstruktur (6;48) von einer Schaummasse gebildet ist.

11. Verfahren nach einem der Ansprüche 1 bis 8, bei dem die kompressible Positionierstruktur (6;48) von einer porösen Struktur gebildet ist.

12. Verfahren nach einem der Ansprüche 1 bis 8, bei dem die kompressible Positionierstruktur (6;48) von einer Gesamtheit von gewebten oder geflochtenen Fäden gebildet ist.

13. Verfahren nach einem der Ansprüche 1 bis 8, bei dem die Positionierstruktur (34) von einer gewellten, für das Bindemittel permeablen Bahn gebildet ist oder Perforationen aufweist.

14. Verfahren nach einem der Ansprüche 1 bis 8, bei dem die kompressible Positionierstruktur (6;48) von einem Wellpapier, das für das Bindemittel permeabel ist oder Perforationen aufweist, gebildet ist.

15. Verfahren nach einem der vorangehenden Ansprüche, bei dem die kompressible Positionierstruktur (48) eine erste Partie (50) und eine zweite Partie (52) umfaßt, welche ersten und zweiten Partien sich beidseits des elektronischen Elements (8) befinden.

16. Verfahren nach Anspruch 1, bei dem das aufgebrachte Bindemittel (12;42) von einem Harz gebildet ist, welches Harz während des Schrittes H bei Umgebungstemperatur aushärtet.

17. Verfahren nach Anspruch 1, bei dem das Bindemittel (12;42) von einem Kunststoffmaterial gebildet ist.

18. Verfahren nach Anspruch 2, bei dem das Bindemittel (12) in zwei Phasen aufgebracht wird, wobei die erste Phase aus dem Aufbringen einer ersten Partie des Bindemittels mit den Schritten B und C besteht und die zweite Phase aus dem Aufbringen einer zweiten Partie des Bindemittels nach den Schritten B und C besteht.

19. Verfahren nach Anspruch 3, bei dem das aufgebrachte Bindemittel (42) von zwei Folien (44, 46) gebildet wird, die beidseits der kompressiblen Positionierstruktur (48) und des elektronischen Elementes (8) angeordnet werden.

20. Verfahren nach Anspruch 6 oder 7, bei dem mindestens eine Partie des Bindemittels (12) vor seinem Aufbringen vorab mit der Außenschicht (14) gefügt wird.

21. Verfahren nach Anspruch 6 oder 7, bei dem die kompressible Positionierstruktur (6) vor ihrem Aufbringen vorab mit der Außenschicht (4) gefügt wird.

22. Verfahren nach einem der vorangehenden Ansprüche, bei dem das Aufbringen während des Schrittes B einer Spule (10) mit zwei Enden vorgesehen ist, die direkt mit dem elektronischen Element (8) elektrisch verbunden sind.

23. Verfahren nach einem der vorangehenden Ansprüche, bei dem mehrere Karten gleichzeitig auf der Arbeitsoberfläche (2) gefertigt werden, wobei ein abschließender Schritt des Austrennens jeder der mehreren hergestellten Karten vorgesehen ist.

24. Karte (20;26;30;56) mit mindestens einem elektronischen Element (8) und einer Schicht (22;28;32;58), gebildet durch ein Bindemittel (12;42), in dem das elektronische Element eingebettet ist, welche Karte **dadurch gekennzeichnet** ist, daß sie eine Positionierstruktur (6;34;48) für das elektronische Element umfaßt, die sich im Inneren der von dem Bindemittel gebildeten Schicht befindet, welche Positionierstruktur in einer inneren Zone (23) durch dieses elektronische Element komprimiert ist, in der teilweise das elektronische Element plaziert ist, wobei das Bindenmittel die Positionierstruktur penetriert hat, und eine kompakte Masse bildet, in der das elektronische Element und die Positionierstruktur eingebettet sind.

25. Karte (20;26;30;56) nach Anspruch 24, **dadurch gekennzeichnet**, daß sie eine Spule (10) mit zwei elektrischen Kontaktenden umfaßt, die direkt mit dem elektronischen Element (8) verbunden sind, welches letztere mit der Spule eine von dem Bindemittel (12;42) umhüllte Gesamtheit bildet.

26. Karte (20;30) nach Anspruch 24 oder 25, **dadurch gekennzeichnet**, daß sie eine erste Außenschicht (4) und eine zweite Außenschicht (14) umfaßt, wobei die von dem Bindemittel (12) gebildete Schicht (22;32) eine Zwischenschicht zwischen der ersten und der zweiten Außenschicht bildet, wobei mindestens der größere Teil der Innenoberfläche (36;38) jeder der ersten und zweiten Außenschichten von dem Bindemittel bedeckt ist, welches letztere die Kohäsion dieser ersten und zweiten Außenschichten mit der Zwischenschicht sicherstellt.

## Claims

1. Method of manufacture of a card, comprising a first group of steps including the following steps :
B) bringing at least one electronic element (8) onto a work surface (2);
C) bringing a compressible positioning structure (6;34; 48) onto said work surface in a manner such that said electronic element and such compressible positioning structure are superposed;
D) bringing a binder (12;42) onto said work surface; this first group of steps being followed by a second group of steps including the following steps :
G) application of pressure onto an assembly including said electronic element (8), said compressible positioning structure (6;34;48) and said binder (12;42) in order to cause, on the one hand, said electronic element to penetrate at least partially into said positioning structure by compressing this latter through this electronic element in order to assure the positioning of this latter and, on the other hand, to permit a lateral flow of said binder and the penetration of said positioning structure by said binder when such latter is in a viscous liquid state to form a mass in which said electronic element and said positioning structure are immersed;
H) solidification of said mass formed in a manner such that said mass rigidly binds said electronic element (8) and said compressible positioning structure (6;34;48) and solidifies this latter in a configuration resulting from step G.

2. Method according to claim 1, in which said binder (12;42) supplied during step D is formed by a viscous liquid.

3. Method according to claim 1, in which said binder (12;42) supplied during step D is formed by a meltable solid material and the second group of steps also includes the following step :
F) supplying energy serving to melt said binder at least partially;
said step H being subsequent to said step F.

4. Method according to claim 3, in which said step G includes a first phase, preceding said step F, in which said pressure applied to said assembly serves to cause at least partial penetration of said electronic element (8) into said compressible positioning structure (6;34;48) and a second phase simultaneous with or subsequent to said step F in which said pressure applied to said assembly permits said binder to form a mass in which said electronic element is immersed.

5. Method according to any one of claims 1 to 4, in which said compressible positioning structure (6;34;48) is entirely immersed in said binder after said step G.

6. Method according to any one of claims 1 to 5, in which said first group of steps further includes the following step :
A) bringing an outer layer (4) onto said work surface and the positioning of such outer layer in a manner such that said assembly is located on said outer layer.

7. Method according to any one of claims 1 to 5, in which said first group of steps further includes the following step :
E) bringing an outer layer (14) onto said assembly.

8. Method according to claim 6 or 7, in which said steps G and H also serve to bind solidly said outer layer (4;14) to said mass formed by said binder (12).

9. Method according to any one of the preceding claims, in which said compressible positioning structure (6;48) is formed by an expanded material.

10. Method according to claim 9, in which said compressible positioning structure (6;48) is formed by a foam.

11. Method according to any one of claims 1 to 8, in which said compressible positioning structure (6;48) is formed by a honeycomb structure.

12. Method according to any one of claims 1 to 8, in which said compressible positioning structure (6;48) is formed by an assembly of woven or tangled threads.

13. Method according to any one of claims 1 to 8, in which said compressible positioning structure (34) is formed by a corrugated sheet permeable to said bunder or exhibiting perforations.

14. Method according to any one of claims 1 to 8, in which said compressible positioning structure (6;48) is formed by an embossed paper permeable to said binder or exhibiting perforations.

15. Method according to any one of the preceding claims, in which said compressible positioning structure (48) comprises a first part (50) and a second part (52), such first and second parts being respectively arranged on either side of said electronic element (8).

16. Method according to claim 1, in which said binder (12;42) as applied is formed by a resin, such resin hardening during said step H at ambient temperature.

17. Method according to claim 1, in which said binder (12;42) is constituted by a plastic material.

18. Method according to claim 2, in which said binder (12) is applied in two phases, the first phase consisting in an application of a first portion of said binder before said steps B and C, the second phase consisting in applying a second portion of said binder after such steps B and C.

19. Method according to claim 3, in which said binder (42) as applied is formed by two sheets (44;46) aranged on either side of said compressible positioning structure (48) and said electronic element (8).

20. Method according to claim 6 or 7, in which at least a portion of said binder (12) is assembled beforehand with said outer layer (14) before being brought in.

21. Method according to claim 6 or 7, in which said compressible positioning structure (6) is assembled beforehand with said outer layer (4) before being brought in.

22. Method according to any one of the preceding claims, in which there is supplied at the time of said step B a coil (10) having two electrical coupling ends directly connected to said electronic element (8).

23. Method according to any one of the preceding claims, in which several cards are simultaneously fashioned on said work surface (2), a final step of cutting out of each of the several cards being provided.

24. Card (20;26;30;56) comprising at least one electronic element (8) and a layer (22;28;32;58) formed by a binder (12;42) in which said electronic element is immersed, such card being **characterized in that** it comprises a positioning structure (6;34;48) for said electronic element located in the interior of said layer formed by said binder, such positioning structure being compressed through this electronic element in an internal zone (23) in the interior of which said electronic element is positioned, said binder having penetrated said positioning structure and forming a compact mass in which said electronic element and said positioning structure are immersed.

25. Card (20;26;30;56) according to claim 24, **characterized in that** it comprises a coil (10) having two electrical contact ends directly coupled to said electronic element (8), this latter forming with said coil an assembly coated by said binder (12;42).

26. Card (20;30) according to claim 24 or 25, **characterized in that** it comprises a first outer layer (4) and a second outer layer (14), said layer (22;32)) formed by said binder (12) constituting an intermediate layer between said first and second outer layers, at least the major part of the internal surface (36;38) of each of such first and second outer layers being covered over by said binder, such latter assuring the cohesion of such first and second outer layers with said intermediate layer.
